# EUROPÄISCHE PATENTSCHRIFT

(11) **EP 3 245 428 B1**
(45) Veröffentlichungstag und Bekanntmachung des Hinweises auf die Patenterteilung: **09.03.2022**
(21) Anmeldenummer: 16700888.7
(22) Anmeldetag: 18.01.2016
(51) Int. Cl.: F16J 1/00, F16D 125/06

(54) **DOPPELT NAPFFÖRMIGER KOLBEN FÜR EINE SCHEIBENBREMSE**
DOUBLE CUP-SHAPED PISTON FOR A DISC BRAKE
DOUBLE PISTON EN FORME DE CUVETTE POUR UN FREIN À DISQUE

(30) Priorität: 16.01.2015 DE 102015200623; 11.05.2015 DE 102015208732
(43) Veröffentlichungstag der Anmeldung: 22.11.2017
(73) Patentinhaber: Continental Teves AG & Co. OHG, 60488 Frankfurt am Main (DE)
(72) Erfinder: WINKLER, Thomas, 55131 Mainz (DE); WÜRZ, Matthias, 61440 Oberursel (DE); BALZ, Jürgen, 65510 Hünstetten-Oberlibbach (DE); SCHMITTNER, Bernhard, 60488 Frankfurt am Main (DE); DENHARD, Werner, 61381 Friedrichsdorf (DE)
(74) Vertreter: Continental Corporation
(86) Internationale Anmeldenummer: PCT/EP2016/050899
(87) Internationale Veröffentlichungsnummer: WO 2016/113426

(56) Entgegenhaltungen:
- DE-A1- 1 953 541
- US-A- 5 105 917
- US-A1- 2011 132 188

## Beschreibung

Die Erfindung betrifft einen Kolben für eine Scheibenbremse mit elektromechanischer Feststellbremsvorrichtung. Einfache hydraulische Kolben für Scheibenbremsen sind einfach napfförmig sowie mehrstückig aufgebaut und umfassen regelmäßig einen zylindrischen Topf mit endseitig geschlossenem Boden zur Auflage an einer Rückenplatte eines Reibbelags.

Die DE 1953541 A1 bezieht sich auf einen rein hydraulisch betätigbaren Bremskolben für eine Kraftfahrzeugscheibenbremse, der aus Blech tiefgezogen erhalten ist, und wobei eine Stellvorrichtung fehlt. Ein Kolbenboden des Bremskolbens ist nach axial außen - in Richtung Reibbbelagrückenplatte - ausgeprägt, damit ein stabiler Kolben erhalten wird, welcher obendrein eine gehemmte Wärmeübertragung ermöglicht.

Aus der US 5,105,917 A1 geht ein hydraulischer Kraftfahrzeugbremskolben aus Edelstahl hervor. Dieser ist durch Tiefziehen mit Niederhalter bei nach radial auswärts abgewinkeltem Stülprand erhalten, welcher an seinem Kolbenbodenende über eine partiell eingestülpt segmentierte Kugelkalottenvertiefung verfügt. Die Segmente dieser partiellen Kugelkalottenvertiefung sind gegenseitig durch Versteifungsrippen voneinander getrennt bzw. ausgesteift. Eine Schnittstelle für eine gesonderte Stellvorrichtung fehlt.

Dokument US2011132188 A1 offenbart einen Kolben für eine hydraulisch bzw. elektromechanisch betätigbare Scheibenbremse.

Der Erfindung liegt die Aufgabe zu Grunde einen verbesserten Kompromiss zwischen erleichterter Handhabbarkeit, rationalisierter Bauteillogistik in der Kolbenherstellung, verringerter hydraulischer Volumenaufnahme in Kooperation mit der Radbremsenperipherie sowie erweiterter Dauerfestigkeit unter maximalem Beanspruchungskollektiv besonders für die Schwerlastanwendungen einer Scheibenbremse mit elektromechanischer Feststellbremsvorrichtung zu ermöglichen.

Die erfindungsgemäße Lösung beinhaltet in Merkmalskombination erstmals einen doppelt napfförmigen Kolben 1, dessen Kolbenwandung 2 mit einem freien Rand 3 einerseits auf einer Rückenplatte 4 des Reibbelags 5 aufsitzt, und wobei der Kolben 1 andererseits einen Dom 6 aufweist, der diametral zu dem Rand 3 des Kolbens 1 eine offene Aufnahme 7 mit einem Konus 14 für eine elektromechanische Stellvorrichtung SV ausbildet. Die Erfindung bietet Mehrwert, weil Querkrafteinflüsse/ Fluchtungsfehler/ Winkelfehlstellung/ Divergenz zwischen Kolbenachse ax und Kraftwirkung mittels quasielastischer Deformation vom Dom 6 neutralisierbar sind. Folglich wird der Kraftfluss im System optimiert und gleichzeitig ein Spindel-Mutter-Getriebe der Stellvorrichtung SV besonders günstig aufgenommen und geschont.

In vorteilhafter Ausgestaltung der Erfindung ist der Dom 6 zentrisch zur Kolbenwandung 2 sowie einstückig mit dieser ausgebildet und bildet bevorzugt im Kolbeninneren eine eigenständige Aufnahmekavität (Aufnahme 7) aus, welche die Stellvorrichtung SV oder zumindest eine axial gemeinsam mit dem Kolben 1 verschiebbare und drehfest im Kolben 1 gehaltene Mutter der Stellvorrichtung separiert aufnimmt. Dabei ist ein Domfuß 8 mit Vorteil einstückig am Kolbenboden 9 platziert vorgesehen.

Ein Domkopf 10 endet im Abstand z zu dem freien Rand 3 der Kolbenwandung 2. Mit anderen Worten ist eine Gesamtlänge vom Dom 6 kürzer als eine Gesamtlänge vom Kolben 1 ausgebildet.

Eine Domwandung 11 ist im radialen Abstand zur Kolbenwandung 2 sowie zentrisch und abschnittweise parallel zu dieser vorgesehen und durchgreift einen Großteil vom Kolbeninnenraum. Zur Reduktion von Kipp- oder Querkrafteinflüssen ist die Kontur der Domwandung 11 schlank- gestreckt und der Ort der Drucckrafteinspeisung zwischen Mutter und Domwandung 11 ist kopflastig also so weit als möglich in Axialrichtung ax in Richtung zum Domkopf 10 platziert. Mithin ist der gebildete hydraulische Arbeitsraum (vgl. 7) durch die Domwandung 11 nach Art einer festen Membran von dem Freiraum 12 separiert, welcher an die Rückenplatte 4 vom Reibbelag 5 angrenzt. Demzufolge verfügt der Kolben 1, von der Kolbenachse ax in Richtung nach radial außen R gehend, über mehrere, sich teilweise überlappende Wandabschnitte. Die Kontur der im Kolben 1 ausgebildeten Räume (Arbeitsraum, Freiraum 12) ist weitgehend hinterschneidungsfrei und zur jeweiligen Öffnung erweitert (konifiziert/divergierend) mit einer Profilierung 17 gestaltet. Dadurch wird ein gegenläufiges Tiefziehen des Kolbens entlang der Kolbenachse ax aus einem ebenen metallischen Blechwerkstoff mit Hilfe von Ziehstempel, Matritze und Gegenstempel/Ziehkissen bei Raumtemperatur ermöglicht, oder alternativ kann eine Kalt-Massivumformung unter Nutzung von Kaltverfestigung ausgeführt werden. Der ausgebildete Freiraum 12 dient bevorzugt zur mechanischen wie auch thermischen Entkopplung und kann zusätzlich zur Anordnung einer angedeuteten Belaghaltefeder 13 ausgenutzt werden. Durch Verbindung zwischen Reibbelag 5 und Kolben 1 wird eine verbesserte Reibbelagrückstellung (Restbremsmomentvermeidung) beim hydraulischen oder elektromechanischen Lösen der Radbremse ermöglicht. Es versteht sich, dass der Rauminhalt der beiden voneinander abgetrennten Räume je nach Bedarf unterschiedlich bemessen werden kann, um unterschiedliche Optimierungen zu unterstützen. Im Regelfall wird das Volumenverhältnis der beiden Räume etwa 1:1 sein.

Wenigstens ein Abschnitt der Domwandung 11 kann gedehnt, also zugspannungsbeansprucht, sein. Wenigstens ein Abschnitt der Domwandung 11 ist zur Druckkrafteinspeisung über die Mutter der Stellvorrichtung konifiziert (vgl. Konus 14) ausgebildet.

Wenigstens ein weiterer Abschnitt der Domwandung 11 ist für formschlüssigen Angriff (Drehhemmung) an der Mutter unrund profiliert ausgebildet (Profil 15), wie insbesondere eine oder mehrere Schlüsselflächen aufweisen. Die Kraftumlenkung sowie die quasielastische Deformation der Domwandung 11 unter der gegebenen Zugspannung (hydraulische und/oder elektromechanische Beaufschlagung) ist durch radial berührungsfreie Beabstandung Δ zur Kolbenwandung 2 kräftemässig entkoppelt darstellbar.

Demzufolge können beide Wandungsabschnitte und Räume, bei vereinfachter Logistik unter einstückiger Bauweise in Hinblick auf Ihre jeweiligen Aufgaben, optimiert werden (Kolbenwandung: Kolbenführungsfunktion, Druckkraftübertragung auf den Reibbelag; Domwandung: Spindel-Mutter-Kooperation), ohne sich gegenseitig zu beeinflussen. Kipp- oder Knicktendenz der Stellvorrichtung SV ist reduziert.

Hydraulische sowie elektromechanische Zuspannkräfte werden gebündelt über die Domwandung 11 (unter Zugspannung) und den Domfuß 8 (unter Zugspannung) in den Kolbenboden 9 und von dort in die Kolbenwandung 2 (Druckspannung) eingeleitet, um über den freien Rand 3 (mit Druckspannung) auf die Rückenplatte 4 vom Reibbelag 1 zu gelangen (vgl. Kraftfluss Kf) . Der Domboden 10 ist für maximal abgestimmte Spindelaufnahme zylindrisch-napfförmig vertieft sowie mit einer planen Bodenfläche 15 ausgebildet. Durch die entsprechend günstige Anschmiegung der Domkontur an die angrenzenden peripheren Bauteile der Stellvorrichtung SV ist der hydraulische Arbeitsraum ohne gesonderte Einlegeteile so groß wie zwingend nötig darstellbar. Mit anderen Worten ist es möglich, unnötiges hydraulisches Volumen im Arbeitsraum, also unnötiges hydraulisches Druckmittel, nebenbei einzusparen. Also ist der hydraulische Arbeitsraum im Dom 6 optimal reduzierbar, wenn die Kontur vom Dom 6 der Kontur der Stellvorrichtung SV weitgehend folgt. Durch weitgehend deckungsgleiche Formgebung von Domwandung 11 und Spindel-Mutter-Getriebe kann ein Bremsflüssigkeitsbedarf ohne Zusatzaufwand besonders günstig reduziert werden.

In der Zeichnung zeigt:

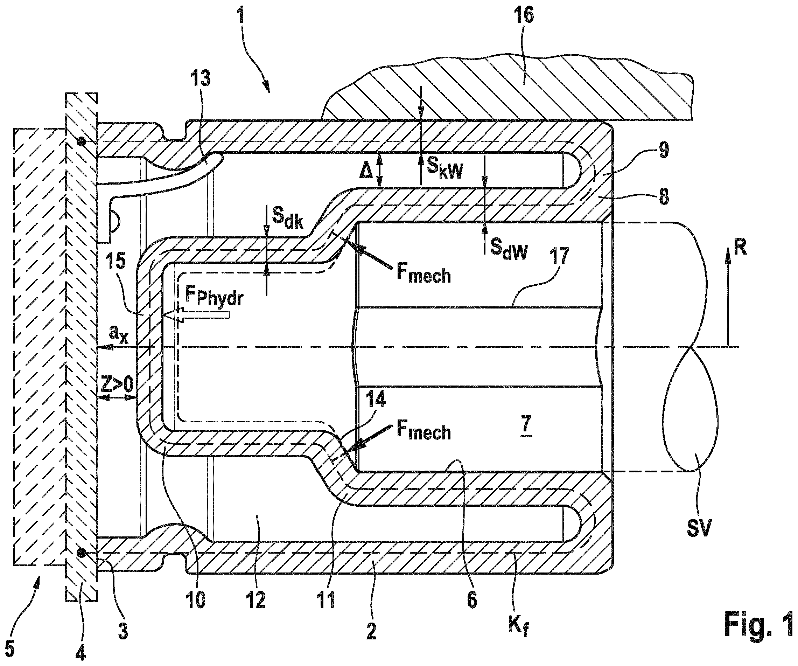

- Fig. 1: Schnitt durch einen erfindungsgemäßen Kolben,

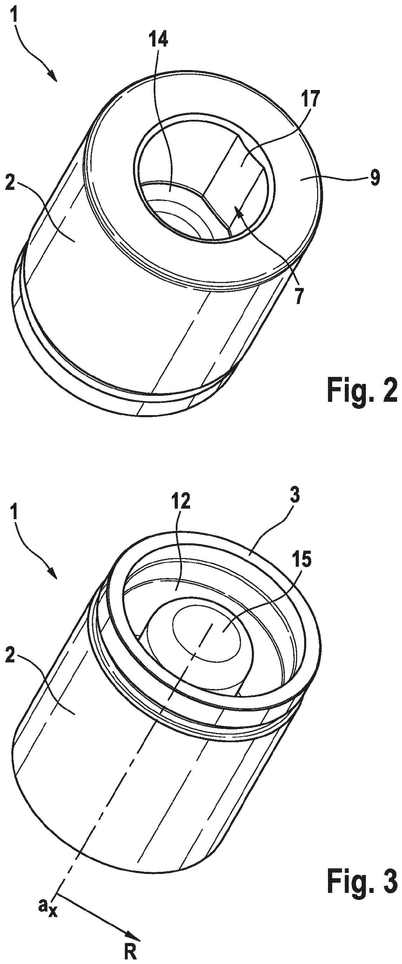

- Fig. 2: perspektivische Ansicht vom Kolben nach Fig. 1 von rechts und
- Fig. 3: perspektivische Ansicht vom Kolben nach Fig. 1 von rechts

Im Folgenden nochmals herausgestellt einige positive Wirkungen und Merkmale der Erfindung:
1. Durch die erfindungsgemäß doppelt napfförmige Wandumlenkung des Kolbens unter Ausstülpung eines Doms 6 zwecks Abgrenzung von zwei sich axial überschneidender, integraler, Räume wird eine neuartige Elastizität ermöglicht. Gleichzeitig wird am belagfernen Ende der Kolbenwandung 2 eine besonders günstige, hebelartig übersetzte (Druck-)Krafteinspeisung am Radius der Kolbenwandung 2 und deren Weiterleitung bis hin zum freien Rand 3 zur Kolbenaufstandsfläche ermöglicht. (Quer-/Kipp-)Beanspruchung der Stellvorrichtung SV ist durch "kopflastige" Einspeisung der Stellvorrichtung SV und verbesserte, entkoppelte, Kolbenführung im Bremsgehäuse 16 vermieden/reduziert.
2. Winkel (fehlstellungs-) ausgleich zwischen Stellvorrichtung (Spindel-Mutter-Getriebe SV) und Kolben 1 durch quasielastische Kolbengestaltung.
3. Reduktion der hydraulischen Volumenaufnahme der Arbeitskammer ermöglicht.
4. Neuartige Möglichkeit der integralen Platzierung einer Belaghaltefeder 13 im Freiraum 12 => Durch die Belaghaltefeder 13 wird es bei den kombiniert betätigbaren Radbremsen erstmals ermöglicht, dass der Reibbelag an einer Lösebewegung vom Kolben teilnehmen kann. Demzufolge wird der Vorteil erzielt, dass Restbremsmomente bei gelöster Bremse vermieden oder reduziert werden.
5. Möglichkeit einer besonders beanspruchungsgerechten Wandstärkenanpassung (beispielsweise Sdk≤Sdw≤SKw) durch spanloses Tiefziehen/ Abstrecken (Blechumformung) oder spanloses Kaltmassivumformen von metallischem Werkstoff für besonders beanspruchungsgerechte, leichte und effiziente sowie spanvermeidende Bauteilfertigung. Kolbengewichtsreduktion wird ermöglicht.
6. Keine Beeinträchtigung einer Kolbenführung im Bremsengehäuse 16 unter hohen Zuspannkräften (Entkopplung). "Kolbenfresser" werden vermieden.
7. Ausnutzung von metallischer Kaltverfestigung zur beanspruchungsgerechten, partiellen, Bauteilhärtung.

Zielführende Maßnahmen:
1. Entkoppelnder Freiraum 12 zwischen Kolbenwandung 2 und Dom 6. Dom 6 bildet eine separierte Aufnahme 7 für die Stellvorrichtung SV im Kolbeninnenraum.
2. Axialer Abstand Z > 0 zwischen belagseitiger Kolbenaufstandsfläche und Domkopf 10/Domkopfboden 15. Der Domkopfboden 15 definiert den axialen Abstand z in Bezug auf den freien Rand 3 /der Kolbenaufstandsfläche an der Belagrückenplatte 4. Der Domkopfboden 15 tritt also immer um das Maß z in der Axialrichtung ax hinter den freien Rand 3 der Kolbenwandung 2 zurück. Dadurch ist sicher gestellt, dass selbst unter höchster elektromechanischer und/oder hydraulischer Beanspruchung eine definierte axiale Anlage zwischen Kolben 1 und Rückenplatte 4 ausschließlich im Bereich der Kolbenaufstandsfläche garantiert ist.

### Bezugszeichenliste

- 1: Kolben
- 2: Kolbenwandung
- 3: freier Rand
- 4: Rückenplatte
- 5: Reibbelag/Bremsbelag
- 6: Dom
- 7: Aufnahme(kavität)
- 8: Domfuß
- 9: (Kolben)boden
- 10: Domkopf
- 11: Domwandung
- 12: Freiraum
- 13: Belag(halte)feder
- 14: Konus
- 15: Profil
- 16: (Brems)gehäuse
- 17: Profilierung
- Ax: Axialrichtung/Kolbenachse
- R: Radialrichtung
- Sdk: Wandstärke Domkopf
- SdW: Wandstärke Domwandung
- SkW: Wandstärke Kolbenwandung
- Δ: (radial-)Abstand zw. Kolbenwandung und Domwandung
- Z: (axial-)Abstand zw. Domkopfboden und freiem Rand
- SV: Stellvorrichtung (sinnbildlich)
- Kf: Kraftfluss
- Fphydr.: hydraulischer Kraftanteil
- Fmech: (elektro-)mechanischer Kraftanteil

## Patentansprüche

1. Doppelt napfförmiger Kolben (1), für eine Scheibenbremse umfassend eine elektromechanische Feststellbremsvorrichtung, wobei eine Kolbenwandung (2) vorliegt, die vorgesehen ist, um mit einem freien Rand (3) einerseits auf einer Rückenplatte (4) eines Reibbelags (5) auf zusitzen, und wobei der Kolben (1) andererseits ausgehend von einem Kolbenboden (9) einen integralen Dom (6) aufweist, der diametral zu dem Rand (3) des Kolbens (1) eine offene Aufnahme (7) für eine Stellvorrichtung (SV) der elektromechanischen Feststellbremsvorrichtung ausbildet, wobei zumindest ein Abschnitt einer Domwandung (11) für formschlüssigen Angriff an der elektromechanischen Stellvorrichtung (SV) unrund, profiliert, ausgebildet ist, und wobei wenigstens ein Abschnitt der Domwandung (11) zur Druckkrafteinspeisung über die Stellvorrichtung (SV) mit einem Konus (14) ausgebildet ist.

2. Doppelt napfförmiger Kolben (1) nach den Merkmalen des Patentanspruchs 1, **dadurch gekennzeichnet, dass** der Dom (6) zentrisch zur Kolbenwandung (2) sowie einstückig mit dieser ausgebildet ist, und im Kolbeninneren eine eigenständige Aufnahmekavität (7) ausbildet, welche die Stellvorrichtung (SV) oder wenigstens eine Komponente der Stellvorrichtung (SV) separiert aufnimmt.

3. Doppelt napfförmiger Kolben (1) nach einem oder mehreren der vorhergehenden Ansprüche, **dadurch gekennzeichnet, dass** der Dom (6) mit einem Domfuß (8) einstückig am Kolbenboden (9) angeordnet ist.

4. Doppelt napfförmiger Kolben (1) nach einem oder mehreren der vorhergehenden Ansprüche, **dadurch gekennzeichnet, dass** die Positionierung des Domkopfs (10) im axialen Abstand (z) zu dem freien Rand (3) der Kolbenwandung (2) derart endet, dass eine Gesamtlänge des Doms (6) kürzer als eine Gesamtlänge des Kolbens (1) ausgebildet ist.

5. Doppelt napfförmiger Kolben (1) nach einem oder mehreren der vorhergehenden Ansprüche, **dadurch gekennzeichnet, dass** die Domwandung (11) in radialem Abstand zur Kolbenwandung (2) sowie zentrisch und abschnittweise parallel zu dieser vorgesehen ist, um einen Großteil des Kolbeninneren zu durchgreifen.

6. Doppelt napfförmiger Kolben (1) nach einem oder mehreren der vorhergehenden Ansprüche, **dadurch gekennzeichnet, dass** ein hydraulischer Arbeitsraum (7) durch die integrale Domwandung (11) membranartig von einem Freiraum (12) separiert ist wobei mehrere sich teilweise gegenseitig überlappende Wandabschnitte ausgebildet sind.

7. Doppelt napfförmiger Kolben (1) nach Anspruch 6, **dadurch gekennzeichnet, dass** eine Kontur der im Kolben (1) integral separiert vorgesehenen Räume (7, 12) hinterschneidungsfrei und zur jeweiligen Öffnung erweitert wie insbesondere konifiziert und/oder divergent ausgebildet ist, und durch gegenläufig in der Kolbenaxrichtung (ax) ausgerichtet ausgeführte Tiefziehoperationen gebildet sind.

8. Doppelt napfförmiger Kolben (1) nach einem oder mehreren der vorhergehenden Ansprüche, **dadurch gekennzeichnet, dass** der Reibbelag (5) mit dem Kolben (1) mechanisch verbindbar ist.

9. Doppelt napfförmiger Kolben (1) nach Anspruch 7, **dadurch gekennzeichnet, dass** der Rauminhalt der beiden voneinander abgetrennten Räume (7, 12) im Kolben (1) unterschiedlich bemessen ist.

10. Doppelt napfförmiger Kolben (1) nach einem oder mehreren der vorhergehenden Ansprüche, **dadurch gekennzeichnet, dass** die Domwandung (11) durch radial berührungsfreie Beabstandung Δ zur Kolbenwandung (2) radialkraftentkoppelt dargestellt ist.

## Claims

1. Double cup-shaped piston (1), for a disc brake comprising an electromechanical parking brake apparatus, there being a piston wall (2) which is provided to be seated with a free edge (3) firstly on a rear plate (4) of a friction lining (5), and the piston (1) having secondly, emanating from a piston head (9), an integral dome (6) which, diametrically with respect to the edge (3) of the piston (1), configures an open receptacle (7) for an actuating apparatus (SV) of the electromechanical parking brake apparatus, at least one portion of a dome wall (11) being of non-round, profiled configuration for positively locking action on the electromechanical actuating apparatus (SV), and at least one portion of the dome wall (11) being configured with a cone for pressure force input via the actuating apparatus (SV).

2. Double cup-shaped piston (1) according to the features of Patent Claim 1, **characterized in that** the dome (6) is configured centrally with respect to the piston wall (2) and in one piece with the latter, and, in the piston interior, configures a discrete receiving cavity (7) which receives the actuating apparatus (SV) or at least one component of the actuating apparatus (SV) separately.

3. Double cup-shaped piston (1) according to one or both of the preceding claims, **characterized in that** the dome (6) is arranged with a dome base (8) in one piece on the piston head (9).

4. Double cup-shaped piston (1) according to one or more of the preceding claims, **characterized in that** the positioning of the dome head (10) ends at an axial spacing (z) from the free edge (3) of the piston wall (2) in such a way that an overall length of the dome (6) is of shorter configuration than an overall length of the piston (1).

5. Double cup-shaped piston (1) according to one or more of the preceding claims, **characterized in that** the dome wall (11) is provided at a radial spacing from the piston wall (2) and centrally and in sections in parallel with respect to the said piston wall (2), in order to reach through a large part of the piston interior.

6. Double cup-shaped piston (1) according to one or more of the preceding claims, **characterized in that** a hydraulic working space (7) is separated from a clearance (12) by way of the integral dome wall (11) in a membrane-like manner, a plurality of partially mutually overlapping wall portions being configured.

7. Double cup-shaped piston (1) according to Claim 6, **characterized in that** a contour of the spaces (7, 12) which are provided in an integrally separated manner in the piston (1) is configured to be undercut-free and widened towards the respective opening, such as, in particular, butted and/or divergent, and said contour is formed by way of deep-drawing operations which are carried out oriented in opposite directions in the piston axis direction (ax).

8. Double cup-shaped piston (1) according to one or more of the preceding claims, **characterized in that** the friction lining (5) can be connected mechanically to the piston (1).

9. Double cup-shaped piston (1) according to Claim 7, **characterized in that** the volume of the two spaces (7, 12) which are separate from one another in the piston (1) is of different dimensions.

10. Double cup-shaped piston (1) according to one or more of the preceding claims, **characterized in that** the dome wall (11) is decoupled in terms of radial forces by way of radial contact-free spacing Δ from the piston wall (2) .

## Revendications

1. Double piston en forme de cuvette (1) pour un frein à disque, comprenant un dispositif de frein de stationnement électromécanique, une paroi de piston (2) étant présente qui est prévue pour reposer par un bord libre (3) d'une part sur une plaque arrière (4) d'une garniture de friction (5), et le piston (1) présentant d'autre part en partant d'un fond de piston (9) un dôme monobloc (6) qui réalise diamétralement par rapport au bord (3) du piston (1) un logement ouvert (7) pour un dispositif de réglage (SV) du dispositif de frein de stationnement électromécanique, au moins une partie d'une paroi de dôme (11) étant réalisée de manière ovalisée, profilée pour une application par complémentarité de forme au dispositif de réglage électromécanique (SV), et au moins une partie de la paroi de dôme (11) étant réalisée avec un cône (14) pour l'introduction de force de compression par l'intermédiaire du dispositif de réglage (SV).

2. Double piston en forme de cuvette (1) selon les particularités de la revendication 1, **caractérisé en ce que** le dôme (6) est réalisé de manière centrée par rapport à la paroi de piston (2) ainsi que d'un seul tenant avec celle-ci, et réalise à l'intérieur du piston une cavité de réception autonome (7) qui reçoit séparément le dispositif de réglage (SV) ou du moins un composant du dispositif de réglage (SV).

3. Double piston en forme de cuvette (1) selon une ou plusieurs des revendications précédentes, **caractérisé en ce que** le dôme (6) est disposé sur le fond de piston (9) d'un seul tenant avec un pied de dôme (8).

4. Double piston en forme de cuvette (1) selon une ou plusieurs des revendications précédentes, **caractérisé en ce que** le positionnement de la tête de dôme (10) à distance axiale (z) du bord libre (3) de la paroi de piston (2) se termine de telle sorte qu'une longueur totale du dôme (6) est inférieure à une longueur totale du piston (1).

5. Double piston en forme de cuvette (1) selon une ou plusieurs des revendications précédentes, **caractérisé en ce que** la paroi de dôme (11) est prévue à distance radiale de la paroi de piston (2) ainsi que de manière centrée et par endroits parallèle à celle-ci afin de traverser une majeure partie de l'intérieur de piston.

6. Double piston en forme de cuvette (1) selon une ou plusieurs des revendications précédentes, **caractérisé en ce qu'**un espace de travail hydraulique (7) est séparé d'un espace libre (12) par la paroi de dôme monobloc (11) à la manière d'une membrane, dans lequel plusieurs parties de paroi se recouvrant en partie mutuellement sont réalisées.

7. Double piston en forme de cuvette (1) selon la revendication 6, **caractérisé en ce qu'**un contour des espaces (7, 12) prévus de manière intégralement séparée dans le piston (1) est réalisé sans contre-dépouille et de manière élargie vers l'ouverture respective, en particulier de manière conifiée et/ou divergente, et est formé par des opérations d'emboutissage profond réalisées avec une orientation à contresens dans la direction axiale de piston (ax).

8. Double piston en forme de cuvette (1) selon une ou plusieurs des revendications précédentes, **caractérisé en ce que** la garniture de friction (5) peut être reliée mécaniquement au piston (1).

9. Double piston en forme de cuvette (1) selon la revendication 7, **caractérisé en ce que** le volume des deux espaces (7, 12) séparés l'un de l'autre dans le piston (1) est dimensionné différemment.

10. Double piston en forme de cuvette (1) selon une ou plusieurs des revendications précédentes, **caractérisé en ce que** la paroi de dôme (11) est représentée de manière découplée en force radiale par un espacement Δ radialement sans contact par rapport à la paroi de piston (2).
